# EUROPÄISCHE PATENTANMELDUNG

(11) **EP 4 736 618 A1**
(43) Veröffentlichungstag der Anmeldung: **06.05.2026**
(21) Anmeldenummer: 24209909.1
(22) Anmeldetag: 30.10.2024
(51) Int. Cl.: A01C 7/20, A01B 73/04, A01B 73/06

(54) **LANDWIRTSCHAFTLICHE SÄMASCHINE**

(71) Anmelder: Kverneland Group Soest GmbH, 59494 Soest (DE)
(72) Erfinder: Kottenstedde, Gregor, 59494 Soest (DE); Neumann, Björn, 59494 Soest (DE); Kühle, Mirco, 59494 Soest (DE)
(74) Vertreter: Bittner, Thomas L.

(57) **Zusammenfassung**

Die Erfindung betrifft eine landwirtschaftliche Sämaschine mit: einem Hauptrahmen (2); einem Heckrahmen (6), der heckseitig des Hauptrahmens (2) angeordnet ist und sich quer zu einer Fahrt- oder Arbeitsrichtung erstreckt und an dem eine sich quer zur Fahrt- oder Arbeitsrichtung ausgebildete Anordnung von Ausbringvorrichtungen angeordnet ist, die jeweils eingerichtet sind, Saatgut auszubringen; einem Koppelrahmen (9), über den der Heckrahmen (6) mit dem Hauptrahmen (2) verbunden ist; und einer Einstelleinrichtung (10), die dem Heckrahmen (6) zugeordnet und eingerichtet ist, den Heckrahmen (6) in eine erste Rahmenstellung, in welcher der Heckrahmen (6) in einer ersten Relativstellung zum Hauptrahmen (2) angeordnet ist, und in eine zweite Rahmenstellung zu verlagern, in welcher der Heckrahmen (6) in einer zweiten Relativstellung zum Hauptrahmen (2) angeordnet ist, die von der ersten Relativstellung verschieden ist.

## Beschreibung

Die Erfindung betrifft eine landwirtschaftliche Sämaschine.

### Hintergrund

Landwirtschaftliche Sämaschinen dienen dazu, ein Saatgut auszubringen. Es sind Sämaschinen bekannt, bei denen quer zur Fahrt- oder Arbeitsrichtung eine Reihenanordnung von Ausbringvorrichtungen ausgebildet ist, wobei es sich bei den Ausbringvorrichtungen zum Beispiel um eine jeweilige Säreihe handeln kann. Mit Hilfe der Reihenanordnung von Ausbringvorrichtungen ist eine Arbeitsbreite für die landwirtschaftliche Sämaschine ausgebildet.

Die Ausbringvorrichtungen weisen jeweils eine Furchenbildungseinrichtung, zum Beispiel in Form einer oder mehrerer Schneidscheiben, sowie eine Ausbringeinrichtung auf, die eingerichtet ist, dass Saatgut in die zuvor hergestellte Furche auszubringen. Die Ausbringvorrichtungen können jeweils weitere funktionelle Komponenten aufweisen, zum Beispiel eine Tiefeneinstelleinrichtung, die mit einem oder zwei Tiefeneinstellrädern gebildet sein kann und eingerichtet ist, für die Furchenbildungseinrichtung eine Eindringtiefe in den Erdboden beim Herstellen der Furche einzustellen.

Dokument EP 4 311 413 A1 betrifft eine landwirtschaftliche Maschine, insbesondere Sämaschine, mit einem mehrere an jeweils einem Scharträger angeordnete Säschare aufweisenden Scharrahmen, der über eine Schartiefeneinstellung zur Einstellung unterschiedlicher Arbeitstiefen der Säschare um eine Tiefenachse gegenüber einem Rahmenträger verschwenkbar ist, wobei die Scharträger über eine Schardruckeinstellung zur Einstellung unterschiedlicher auf die Säschare wirkender Schardrücke um eine Druckachse verschwenkbar sind, wobei die Druckachse über die Schartiefeneinstellung auf einer Umlaufbahn um die Tiefenachse verschwenkbar ist.

Dokument US 2021 / 0059099 A1 bezieht sich auf ein Radträgersystem. Das Radträgersystem umfasst einen Radträgerarm, der mit einem Rad und einem Radträgerrahmen gekoppelt ist. Eine Verbindung dreht ein Bodeneingriffswerkzeugsystem in Bezug auf eine Reiheneinheit, um das Bodeneingriffswerkzeugsystem von einer abgesenkten Position in eine angehobene Position zu überführen. Ein Aktuator dreht gleichzeitig den ersten Radträgerarm von einer ersten Position in eine zweite Position und das Bodeneingriffswerkzeugsystem von der abgesenkten Position in die angehobene Position.

### Zusammenfassung

Aufgabe der Erfindung ist es, eine landwirtschaftliche Sämaschine anzugeben, bei der Einstellungen für eine Anordnung von Ausbringvorrichtungen beim Betrieb der landwirtschaftlichen Sämaschine flexibel wählbar sind, insbesondere zum Ausbringen des Saatguts.

Zur Lösung ist eine landwirtschaftliche Sämaschine nach dem unabhängigen Anspruch 1 geschaffen. Ausgestaltungen sind Gegenstand von abhängigen Unteransprüchen.

Nach einem Aspekt ist eine landwirtschaftliche Sämaschine geschaffen, die Folgendes aufweist: einen Hauptrahmen; einen Heckrahmen und einen Koppelrahmen, über den der Heckrahmen mit dem Hauptrahmen verbunden ist. Der Heckrahmen ist heckseitig des Hauptrahmens angeordnet und erstreckt sich quer zu einer Fahrt- oder Arbeitsrichtung. An dem Heckrahmen ist eine sich quer zur Fahrt- oder Arbeitsrichtung ausgebildete Anordnung von Ausbringvorrichtungen angeordnet, die jeweils eingerichtet sind, Saatgut auszubringen. Die landwirtschaftliche Sämaschine weist weiterhin eine Einstelleinrichtung auf, die dem Heckrahmen zugeordnet und eingerichtet ist, den Heckrahmen in eine erste Rahmenstellung, in welcher der Heckrahmen in einer ersten Relativstellung zum Hauptrahmen angeordnet ist, und in eine zweite Rahmenstellung zu verlagern, in welcher der Heckrahmen in einer zweiten Relativstellung zum Hauptrahmen angeordnet ist, die von der ersten Relativstellung verschieden ist.

Mit Hilfe der Einstelleinrichtung ist es ermöglicht, den Heckrahmen in unterschiedlichen Rahmenstellungen oder -positionen relativ zum Hauptrahmen anzuordnen, wodurch im Betrieb der landwirtschaftlichen Sämaschine für die Anordnung von Ausbringvorrichtungen, die am Heckrahmen aufgenommen und sich zumindest im Betrieb zum Ausbringen von Saatgut quer zur Fahrt- oder Arbeitsrichtung erstreckt, unterschiedliche Einstellungen eingestellt werden können. Insbesondere beim Ausbringen des Saatguts können die Ausbringvorrichtungen, bei denen es sich zum Beispiel um Säreihen handelt, in eine gewünschte Betriebsstellung verlagert werden, indem eine entsprechend zugeordnete Rahmenstellung für den Heckrahmen eingestellt wird.

Die dem Heckrahmen zugeordnete Einstelleinrichtung kann mit dem Hauptrahmen verbunden sein und so beispielweise eine Art Bindeglied zwischen Haupt- und Heckrahmen bilden.

An dem Hauptrahmen kann eine Kopplungsvorrichtung vorgesehen sein, insbesondere frontseitig, die eingerichtet ist, die landwirtschaftliche Sämaschine an einen Schlepper zu koppeln.

In einer Transport- oder Nicht-Betriebsstellung kann sich die Anordnung von Ausbringvorrichtungen in Fahrt- oder Arbeitsrichtung erstrecken, beispielweise dahingehend, dass Abschnitte der Anordnung aus der Querstellung heraus auf gegenüberliegenden Seiten in eine jeweilige Stellung in Fahrt- oder Arbeitsrichtung verlagert sind.

Die Ausbringvorrichtungen können jeweils eine Furchenbildungseinrichtung aufweisen, zum Beispiel ein oder mehrere Schneidscheiben, die eingerichtet ist, eine Furche zum Ausbringen des Saatguts im Boden herzustellen, wenn die landwirtschaftliche Maschine in Arbeits- oder Fahrtrichtung im Feld bewegt wird. Den Ausbringvorrichtungen kann weiterhin jeweils eine Ausbringeinrichtung zugeordnet sein, mit der das Saatgut in die zuvor hergestellte Furche ausgebracht wird. Weitere funktionale Komponenten, beispielsweise weitere Bodenbearbeitungswerkzeuge, können der Furchenbildungseinrichtung und / oder der Ausbringeinrichtung vor- oder nachgelagert sein, zum Beispiel eine Andruckrolle zum Schließen der Furche und / oder Nachverdichten des Bodens nach dem Schließen der Furche. Unterschiedliche Ausgestaltungen für Ausbringvorrichtungen, insbesondere Säreihen, sind als solche bekannt.

Bei der ersten Rahmenstellung kann es sich um eine Arbeitsstellung handeln, in welcher seitliche Arme des Heckrahmens ausgeschwenkt oder ausgeklappt sind, so dass die Anordnung der Ausbringvorrichtungen entlang einer Linie quer zur Fahrt- oder Arbeitsrichtung ausgebildet ist. Die zweite Rahmenstellung kann auch eine solche Arbeitsstellung sein, in welcher seitliche Arme des Heckrahmens ebenso ausgeschwenkt oder ausgeklappt sind, wobei der Heckrahmen relativ zum Hauptrahmen im Vergleich zur ersten Rahmenstellung (erste Arbeitsstellung) jedoch verlagert ist, zum Beispiel in Bezug zum Boden angehoben oder abgesenkt ist. Bei der zweiten Rahmenstellung kann es sich alternativ um eine Nicht-Arbeitsstellung handeln, in welcher mittels Anheben des Heckrahmens die Ausbringvorrichtungen vom Erdboden ausgehoben sind, beispielsweise wenn sich die landwirtschaftliche Sämaschine im Bereich eines Vorgewendes bewegt.

Die Ausbringvorrichtungen können weiterhin dazu eingerichtet sein, ergänzend zum Saatgut ein Düngermaterial auszubringen, sei es ein granulierts oder ein flüssiges Düngermaterial. Hierzu kann eine weitere Furchenbildungseinrichtung mit einer oder mehreren Schneidscheiben vorgesehen sein.

Die Einstelleinrichtung kann eingerichtet sein, die erste Rahmenstellung derart einzustellen, dass im Betrieb zum Ausbringen des Saatguts ein horizontales Rahmenbauteil des

Heckrahmens im Wesentlichen parallel zur Bodenoberfläche angeordnet ist. Bei dem Rahmenbauteil kann es sich zum Beispiel um ein horizontales Rahmenbauteil des Heckrahmens handeln, dass sich in der Fahrt- oder Arbeitsrichtung oder schräg hierzu erstreckt.

Das horizontale Rahmenbauteil kann sich insbesondere dann in horizontaler Ausrichtung erstrecken, wenn der Heckrahmen in einer Standardposition oder -stellung angeordnet ist. Ähnlich kann sich eine vertikales Rahmenbauteil des Heckrahmens kann sich insbesondere dann in vertikaler Ausrichtung erstrecken, wenn der Heckrahmen in der Standardposition oder -stellung angeordnet ist. Eine Änderung der Rahmenstellung aus der Standardposition oder -stellung heraus kann dazu führen, dass das horizontale und das vertikale Rahmenbauteil jeweils in eine Neigungs- oder Schräglage zur Horizontalen / Vertikalen verlagert werden.

Die räumliche Orientierung des horizontalen Rahmenbauteils des Heckrahmens, die hier zum Beispiel für eine im Wesentlichen parallele Ausrichtung zur Bodenoberfläche vorgesehen ist, kann als Bezugsgröße für eine der parallelen Ausrichtung zugeordnete Lage von Arbeitswerkzeugen der Ausbringvorrichtungen dienen, insbesondere Bodenbearbeitungswerkzeuge, so dass anhand der parallelen Ausrichtung des horizontalen Rahmenbauteils eine vorgegebene Ausrichtung oder Lage der Arbeitswerkzeuge einstellbar ist, insbesondere eine parallele Ausrichtung zur Bodenoberfläche.

Die Einstelleinrichtung kann eingerichtet sein, die zweite Rahmenstellung derart einzustellen, dass im Betrieb zum Ausbringen des Saatguts das horizontale Rahmenbauteil des Heckrahmens relativ zur Bodenoberfläche in einer geneigten Stellung angeordnet ist. Das Rahmenbauteil des Heckrahmens wird beim Übergang aus der ersten Rahmenstellung in die zweite Rahmenstellung so geneigt, was gezielt die Einstellung für eine Lage oder Stellung der Arbeitswerkzeuge an den Ausbringvorrichtungen einstellt, die an dem Heckrahmen aufgenommen sind.

Die Ausbringvorrichtungen können jeweils wenigstens zwei Arbeitswerkzeuge aufweisen, zum Beispiel Bodenbearbeitungswerkzeuge, die in der Fahrt- oder Arbeitsrichtung hintereinanderliegend angeordnet sind. Die Einstelleinrichtung kann eingerichtet sein, die erste Rahmenstellung derart einzustellen, dass im Betrieb zum Ausbringen des Saatguts eine durch die wenigstens zwei Arbeitswerkzeuge in Fahrt- oder Arbeitsrichtung verlaufende Verbindungslinie im Wesentlichen parallel zur Bodenoberfläche angeordnet ist. Zur Steuerung der Einstelleinrichtung dient hier als Bezugsgröße oder Einstellparameter die Lage oder Orientierung der Verbindungslinie zwischen den Arbeitswerkzeugen. Handelt es sich bei den Arbeitswerkzeugen um Werkzeuge, die um eine Drehachse drehbar sind, kann die Verbindungslinie durch die Drehachsen verlaufen.

Die Verbindungslinie kann in zumindest einer Rahmenstellung des Heckrahmens parallel oder schräg zum horizontalen Rahmenbauteil verlaufen.

Ist für mindestens zwei Bodenbearbeitungswerkzeuge zum Beispiel eine jeweils unterschiedliche Eindringtiefe in den Erdboden vorgesehen, kann mit Hilfe der hier vorgesehenen Einstellung mittels der Einstelleinrichtung die Aufrechterhaltung der unterschiedlichen Eindringtiefe bei der Bodenbearbeitung unterstützt werden, indem die Parallelität der Verbindungslinie zur Bodenoberfläche beim Fahren übers Feld aufrechterhalten wird.

Die Einstelleinrichtung kann eingerichtet sein, die zweite Rahmenstellung derart einzustellen, dass im Betrieb zum Ausbringen des Saatguts die Verbindungslinie relativ zur Bodenoberfläche geneigt ist.

Die Einstelleinrichtung kann mit einer hydraulischen Einstelleinrichtung gebildet sein, die mit dem Heckrahmen und wahlweise mit dem Hauptrahmen verbunden ist. Die hydraulische Einstelleinrichtung kann eingerichtet sein, den Heckrahmen zwischen der ersten und der zweiten Rahmenstellung zu verlagern. Die hydraulischen Einstelleinrichtung kann einen hydraulischen Zylinder aufweisen, der zum Verlagern des Heckrahmens in eine erste und eine zweite Zylinderstellung verlagerbar ist. Die erste und die zweite Zylinderstellung können unterschiedliche Längeneinstellungen des hydraulischen Zylinders sein.

Die hydraulische Einstelleinrichtung, insbesondere der hydraulische Zylinder, kann auf der gegenüberliegenden Seite mit dem Koppelrahmen oder dem Hauptrahmen verbunden sein.

Die Einstelleinrichtung, zum Beispiel der hydraulische Zylinder, kann in Bezug auf die Erstreckung des Heckrahmens quer zur Fahrt- oder Arbeitsrichtung im Wesentlichen mittig an den Heckrahmen koppeln.

In einer Ausführungsform ist die Einstelleinrichtung, insbesondere der hydraulische Zylinder, von oben an den Heckrahmen herangeführt, wodurch eine sogenannte "Top link"-Ausgestaltung ausgebildet sein kann.

Die Ausbringvorrichtungen können über eine jeweilige Parallelogramm-Verbindung mit dem Heckrahmen verbunden sein, derart, dass im Betrieb zum Ausbringen des Saatguts die Ausbringvorrichtungen relativ zum Heckrahmen um eine Mittellage auf und ab schwenkbar sind. Bei der Parallelogramm-Verbindung sind in den Ecken des Parallelogramms jeweils zwei schwenkbare Verbindungen auf Seiten der Ausbringvorrichtung und des Heckrahmens hergestellt. Im Betrieb wird das Schwenken der Ausbringvorrichtungen um eine Mittellage der Parallelogramm-Verbindung insbesondere durch Unebenheiten der Erdoberfläche verursacht sein.

Die Einstelleinrichtung kann eingerichtet sein, mit der ersten Rahmenstellung eine erste Mittellage für die Parallelogramm-Verbindung und mit der zweiten Rahmenstellung eine zweite Mittellage für die Parallelogramm-Verbindung einzustellen, die von der ersten Mittellage verschieden ist. Mit Hilfe der Einstelleinrichtung ist es so ermöglicht, bei unterschiedlichen Betriebsbedingungen jeweils eine Mittellage für die Parallelogramm-Verbindung einzustellen, so dass bei der Fahrt auf dem Feld das Auf- und Abschwenken der Ausbringvorrichtungen relativ zum Heckrahmen effizient ermöglicht ist. Beispielsweise können sich die Betriebsbedingungen ändern, wenn sich der Luftdruck in den Reifen der Räder des Schleppers ändert, wodurch es zu einer abweichenden Relativlage zwischen dem Hauptrahmen der landwirtschaftlichen Sämaschine und dem Rahmen des Schleppers kommt. Die Einstelleinrichtung ist dann nutzbar, auf die geänderte Lage des Hauptrahmens der landwirtschaftlichen Sämaschine zu reagieren, derart, dass mit Hilfe der Einstelleinrichtung die Relativlage des Heckrahmens zum Hauptrahmen angepasst wird, um die Mittellage für die Parallelogramm-Verbindung aufrechtzuerhalten.

Der Heckrahmen kann um eine Schwenkachse schwenkbar sein, und die Einstelleinrichtung kann eingerichtet sein, den Heckrahmen zum Verlagern zwischen der ersten und der zweiten Rahmenstellung um die Schwenkachse zu schwenken. Mittels Schwenken ist für den Heckrahmen mit Hilfe der Einstelleinrichtung zum Beispiel das Einstellen unterschiedlicher Neigungswinkel für den Heckrahmen relativ zum Hauptrahmen ermöglicht.

Die Einstelleinrichtung kann eine weitere hydraulische Einstelleinrichtung aufweisen, die dem Koppelrahmen zugeordnet und eingerichtet ist, den Koppelrahmen in eine erste Koppelrahmenstellung, in welcher der Koppelrahmen in einer ersten Relativstellung zum Hauptrahmen angeordnet ist, und in eine zweite Koppelrahmenstellung zu verlagern, in welcher der Koppelrahmen in einer zweiten Relativstellung zum Hauptrahmen angeordnet ist, die von der ersten Relativstellung verschieden ist. Die Verlagerung des Koppelrahmens zwischen unterschiedlichen Koppelrahmenstellungen verändert auch die Relativstellung zwischen Heckrahmen und Hauptrahmen, da der Heckrahmen über den Koppelrahmen mit dem Hauptrahmen verbunden ist.

Die dem Koppelrahmen zugeordnete weitere hydraulische Einstelleinrichtung kann weiterhin mit dem Hauptrahmen verbunden sein und so zum Beispiel ein Bindeglied zwischen Hauptrahmen und Koppelrahmen bilden.

Die weitere hydraulische Einstelleinrichtung kann eingerichtet sein, eine Höhe des Heckrahmens über dem Boden einzustellen, zum Beispiel eine erste Höhe in der ersten Koppelrahmenstellung und eine zweite Höhe in der zweiten Koppelrahmenstellung, wobei die zweite Höhe von der ersten Höhe verschieden ist. Auf diese Weise ist es ermöglicht, für die Arbeitswerkzeuge der Ausbringvorrichtungen die Relativlage zum Hauptrahmen und zum Boden einzustellen.

Es kann in einer Ausführung vorgesehen sein, dass zum Einstellen der ersten und der zweiten Rahmenstellung für den Heckrahmen sowohl die hydraulische Einstelleinrichtung wie auch die weitere hydraulische Einstelleinrichtung betätigt werden, derart, dass zum Beispiel für das horizontale Rahmenbauteil des Heckrahmens, beispielsweise ein mittleres Rahmenbauteil, in der ersten und der zweiten Rahmenstellung bei unterschiedlicher Höhe des Heckrahmens (des horizontalen Rahmenbauteils) über dem Boden jeweils eine im Wesentlichen parallele Ausrichtung in Bezug zur Bodenoberfläche eingestellt wird. Auf diese Weise kann unter Aufrechterhaltung der im Wesentlichen parallelen Anordnung des horizontalen Rahmenbauteils in Bezug zur Bodenoberfläche zum Beispiel die Eindringtiefe der Bodenbearbeitungswerkzeuge der Ausbringvorrichtungen verändert und eingestellt werden.

Die weitere hydraulische Einstelleinrichtung kann mit wenigstens zwei hydraulischen Zylindern gebildet sein, der mit dem Koppelrahmen verbunden und zum Einstellen der ersten und der zweiten Koppelrahmenstellung jeweils zwischen einer ersten und einer zweiten Zylinderstellung verlagerbar sind. Die wenigstens zwei hydraulischen Zylinder können auf einer Seite mit dem Koppelrahmen und auf einer gegenüberliegenden Seite mit dem Hauptrahmen verbunden sein. Mittels Betätigen der weiteren hydraulischen Einstelleinrichtung kann ein Schwenken des Koppelrahmens um eine Schwenkachse ausführbar sein.

Alternativ kann die weitere hydraulische Einstelleinrichtung nur einen einzelnen hydraulischen Zylinder aufweisen.

Eine Steuereinrichtung kann mit der Einstelleinrichtung funktional verbunden und eingerichtet sein, Steuersignale zum Verlagern des Heckrahmens in die erste und die zweite Rahmenstellung mittels der Einstelleinrichtung bereitzustellen. Die Steuereinrichtung kann zum Beispiel mit einem oder mehreren Prozessoren sowie einer zugeordneten Speichereinrichtung zur elektronischen Datenverarbeitung gebildet sein.

Die Steuervorrichtung kann eingerichtet sein, Hydraulikventile für den Zufluss / Abfluss eines Hydraulikfluids bei der hydraulischen Einstelleinrichtung und / oder der weiteren hydraulischen Einstelleinrichtung zu steuern. Die Steuereinrichtung kann eingerichtet sein, die hydraulische Einstelleinrichtung und die weitere hydraulische Einstelleinrichtung zumindest teilweise gleichzeitig zu betätigen, um den Heckrahmen zwischen der ersten und der zweiten Rahmenstellung zu verlagern. Alternativ kann vorgesehen sein, die hydraulische Einstelleinrichtung und die weitere hydraulische Einstelleinrichtung beim Verlagern des Heckrahmens zwischen der ersten und der zweiten Rahmenstellung nacheinander zu betätigen. So kann in einem Beispiel vorgesehen sein, zunächst den Heckrahmen mit Hilfe der weiteren hydraulischen Einstelleinrichtung anzuheben, um danach die hydraulische Einstelleinrichtung zur Lageeinstellung des Heckrahmens bei veränderter Höhe über der Bodenoberfläche zu betätigen. Auf diese Weise kann zum Beispiel für das horizontale Rahmenbauteil des Heckrahmens bei den beiden verschiedenen Höheneinstellungen über der Bodenoberfläche jeweils eine im Wesentlichen parallele Ausrichtung oder Lage in Bezug auf die Bodenoberfläche eingestellt werden.

Die Einstelleinrichtung kann eine Sensoreinrichtung aufweisen, die mit der Steuereinrichtung funktional verbunden und eingerichtet ist, Sensorsignale bereitzustellen, welche eine momentane Einstellung der Einstelleinrichtung anzeigen. Die Sensoreinrichtung kann zum Beispiel mit Weg- oder Längensensoren an einem oder mehreren hydraulischen Zylindern der hydraulischen Einstelleinrichtung und / oder der weiteren hydraulischen Einstelleinrichtung ausgebildet sein, die beim Verlagern des Heckrahmens zwischen der ersten und der zweiten Rahmenstellung eine veränderte Länge des jeweiligen hydraulischen Zylinders anhand der Sensorsignale anzeigen, die von der Steuereinrichtung ausgewertet werden können, beispielsweise dahingehend, ob eine Ziellänge eines hydraulischen Zylinders bereits erreicht ist. Wenn dies festgestellt wird, kann der Verlagerungsprozess für den Heckrahmen gestoppt werden.

Die Steuereinrichtung kann mit einer Betriebsparameter-Sensoreinrichtung funktional verbunden sein, die eingerichtet ist, im Betrieb zum Ausbringen des Saatguts einen Betriebsparameter zu erfassen und Betriebsparameter-Signale, die den erfassten Betriebsparameter anzeigen, an die Steuereinrichtung zu übermitteln. Weiterhin kann die Steuereinrichtung eingerichtet sein, die Betriebsparameter-Signale auszuwerten und die Einstelleinrichtung in Abhängigkeit hiervon zu steuern.

Die Betriebsparameter-Sensoreinrichtung kann eingerichtet sein, einen Betriebsparameter aus der folgenden Gruppe zu erfassen: Erdbodenfestigkeit, Erdbodenfeuchtigkeit, Neigung des Hauptrahmens und Neigung des Rahmens des Schleppers. Die Neigung von Hauptrahmen der landwirtschaftlichen Sämaschine und / oder des Rahmens des Schleppers können sich zum Beispiel aufgrund unterschiedlichen Reifendrucks in den Rädern des Schleppers ändern. Ebenso kann eine Schräglage im Gelände beim Saatgut ausbringen zur geänderten Neigung führen. Die Steuereinrichtung kann eingerichtet sein, aufgrund der Auswertung der Betriebsparameter-Signale Steuersignale für die Einstelleinrichtung zu erzeugen, um zum Beispiel einen oder mehrere hydraulische Zylinder zu betätigen.

Die Steuereinrichtung kann mit einer Messeinrichtung funktional verbunden sein, die eingerichtet ist, Messsignale zu erfassen und an die Steuereinrichtung zu übermitteln, die eine über die Einstelleinrichtung auf den Koppelrahmen und / oder den Heckrahmen eingeleitete Zugkraft anzeigen. Die Messeinrichtung kann eingerichtet sein, insbesondere Messsignale für die über die weitere hydraulische Einstelleinrichtung auf den Koppelrahmen und / oder den Heckrahmen eingeleitete Zugkraft im Betrieb zu erfassen.

Die Messsignale können von der Steuereinrichtung ausgewertet werden, um beispielsweise zu prüfen, ob die Zugkraft einen Schwellwert überschreitet. Hierauf kann die Steuereinrichtung Informationssignale erzeugen, die das Überschreiten des Schwellwertes anzeigen. Die Informationssignale können von der Steuereinrichtung zum Beispiel an ein Terminal im Traktor übermittelt werden, um über eine Ausgabeeinrichtung des Terminals den Fahrer zu informieren, welcher hierauf Maßnahmen zur Verminderung der momentan eingeleiteten Zugkraft ergreifen kann. Auf diese Weise ist in Bezug auf die wirkende Zugkraft ein Überlastungsschutz beim Betrieb der landwirtschaftlichen Sämaschine ermöglicht.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische perspektivische Darstellung einer landwirtschaftlichen Sämaschine;
- Fig. 2: eine schematische Darstellung eines heckseitigen Teils der landwirtschaftlichen Sämaschine aus Fig. 1, wobei eine Anordnung von Ausbringvorrichtungen in einer angehobenen Nicht-Arbeitsstellung angeordnet ist;
- Fig. 3: eine schematische Darstellung des heckseitigen Teils der landwirtschaftlichen Sämaschine, wobei für den Heckrahmen eine Standard-Position mit der Höhe H2 eingestellt ist;
- Fig. 4: eine schematische Darstellung des heckseitigen Teils der landwirtschaftlichen Sämaschine, wobei für den Heckrahmen eine tiefere Position mit der Höhe H1 eingestellt ist;
- Fig. 5: eine schematische Darstellung des heckseitigen Teils der landwirtschaftlichen Sämaschine, wobei für den Heckrahmen eine erhöhte Position mit der Höhe H3 eingestellt ist;
- Fig. 6: eine schematische Darstellung der landwirtschaftlichen Sämaschine von der Seite, wobei der Heckrahmen eine höchste Stellung verlagert ist;
- Fig. 7: eine schematische Darstellung der landwirtschaftlichen Sämaschine von der Seite, wobei Seitenarme des Heckrahmens jeweils in eine Stellung in Fahr- oder Arbeitsrichtung geschwenkt sind; und
- Fig. 8: eine schematische Darstellung der landwirtschaftlichen Sämaschine von hinten, wobei zusätzlich Ausbringvorrichtungen in eine Transportstellung eingeschwenkt sind.

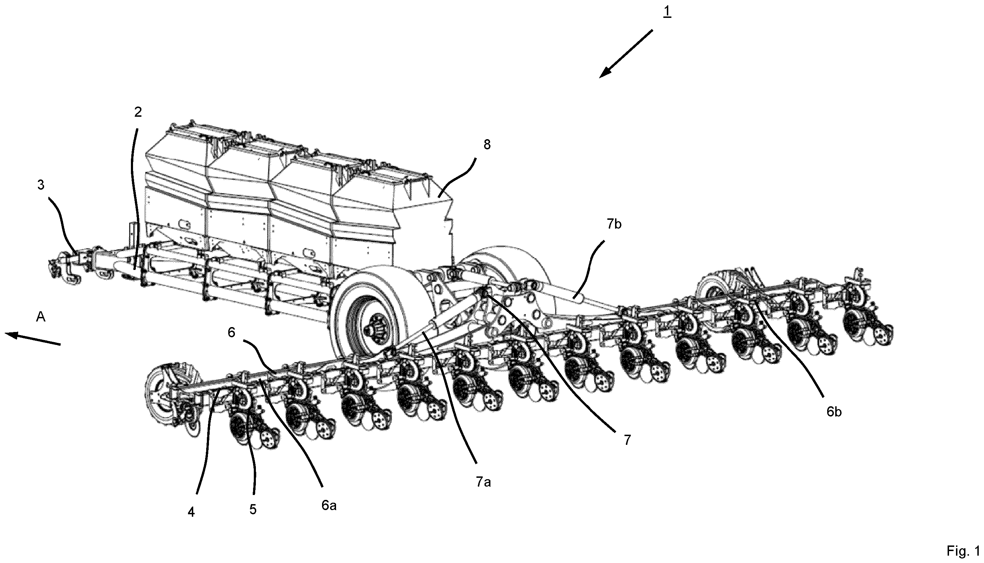

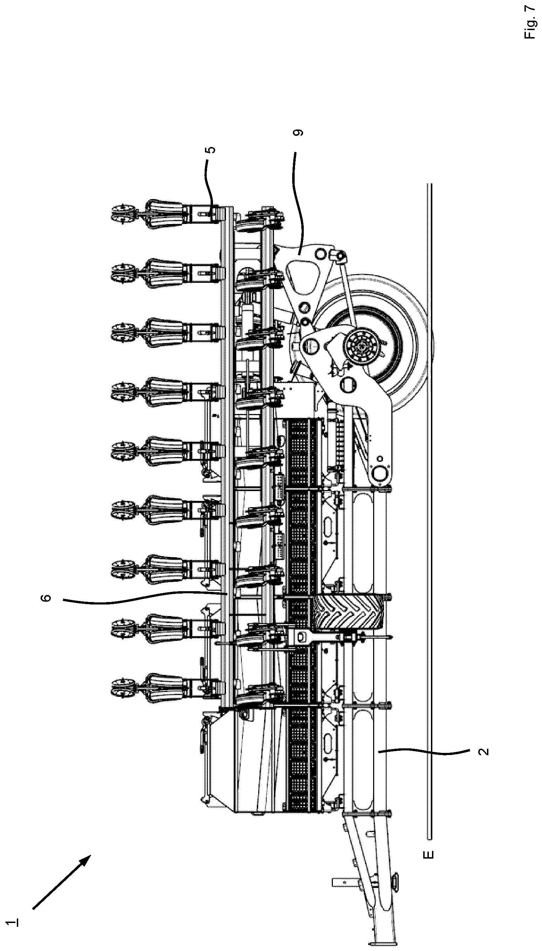

Fig. 1 zeigt eine schematische Darstellung einer landwirtschaftlichen Sämaschine 1, bei der an einem Hauptrahmen 2 frontseitig eine Kopplungseinrichtung 3 angeordnet ist, die eingerichtet ist, die landwirtschaftliche Sämaschine 1 an einen Schlepper (nicht dargestellt) zu koppeln. Heckseitig erstreckt sich bei der landwirtschaftlichen Sämaschine 1 eine Reihenanordnung 4 mit nebeneinander liegenden Ausbringvorrichtungen 5, die beispielsweise jeweils als eine Säreihe ausgeführt sind. Die Ausbringvorrichtungen 5 sind an einem Heckrahmen 6 angeordnet, welcher sich zur Ausbildung der Reihenanordnung 4 quer zur Fahrt- oder Arbeitsrichtung A erstreckt. Seitenarme 6a, 6b des Heckrahmens 6 sind mit Hilfe einer Schwenkeinrichtung 7 zwischen einer in Fig. 1 gezeigten Arbeitsstellung und einer Transportstellung (vgl. Fig. 7 unten) verlagerbar. Die Schwenkeinrichtung 7 ist in der gezeigten Ausführungsform mit zwei hydraulischen Schwenkzylindern 7a, 7b gebildet.

Das mit Hilfe der Ausbringvorrichtungen 5 auszubringende Saatgut wird in einem an dem Hauptrahmen 2 aufgenommenen Tank 8 bereitgestellt und dann auf die Ausbringvorrichtungen 5 jeweils verteilt, insbesondere mittels Druckluft-Transport, wie dies für landwirtschaftliche Sämaschinen in verschiedenen Ausführungsformen als solches bekannt ist.

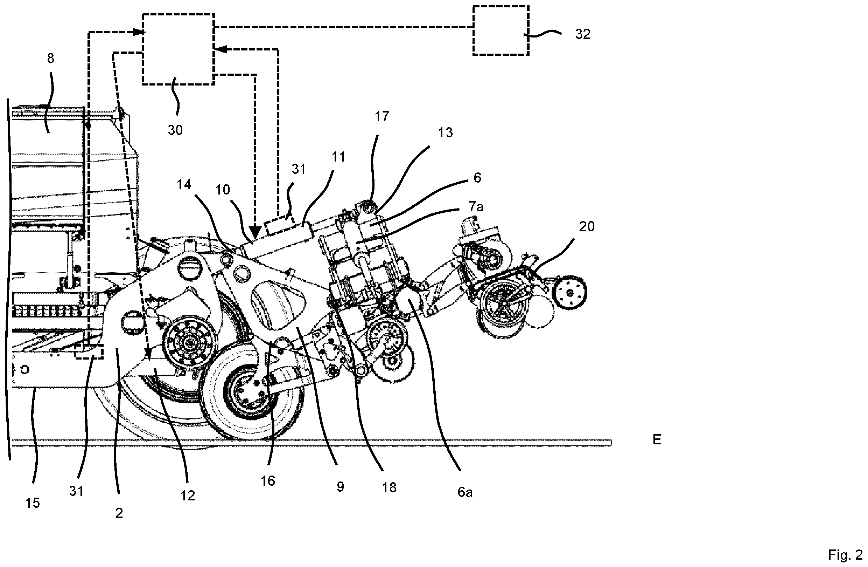

Fig 2 eine schematische Darstellung eines heckseitigen Teils der landwirtschaftlichen Sämaschine 1. Der Heckrahmen ist über einen Koppelrahmen 9 mit dem Hauptrahmen 2 der landwirtschaftlichen Sämaschine 1 verbunden.

Eine Einstelleinrichtung 10 ist vorgesehen, um eine Relativlage des Heckrahmens 6 in Bezug auf den Hauptrahmen 2 einzustellen, insbesondere beim Ausbringen von Saatgut. Mit Hilfe des Einstellens der Relativlage des Heckrahmens 6 zwischen unterschiedlichen Rahmenstellungen in Bezug auf den Hauptrahmen 2 ist es zum Beispiel ermöglicht, die Ausbringvorrichtungen 5 in unterschiedliche Stellungen relativ zum Boden E zu verlagern. In Fig. 2 sind die Ausbringvorrichtungen 5 in einer ausgehobenen Stellung oberhalb des Bodens E angeordnet, welche beispielsweise eingestellt wird, wenn sich die landwirtschaftliche Sämaschine 1 im Bereich eines Vorgewendes befindet.

Die Einstelleinrichtung 10 weist im gezeigten Beispiel eine hydraulische Einstelleinrichtung 11 und eine weitere hydraulische Einstelleinrichtung 12 auf. Die hydraulische Einstelleinrichtung 11 ist mit einem hydraulischen Zylinder gebildet, welcher im gezeigten Beispiel in Bezug auf die sich quer zur Fahrt- oder Arbeitsrichtung A erstreckende Reihenanordnung 4 mittig angeordnet ist. Der hydraulische Zylinder der hydraulischen Einstelleinrichtung 11 koppelt in einem Verbindungsabschnitt 13 an den Heckrahmen 6 und ist auf der gegenüberliegenden Seite mit einem Verbindungsabschnitt 14 des Hauptrahmens 2 verbunden.

Die weitere hydraulische Einstelleinrichtung 12 weist im Ausführungsbeispiel zwei hydraulische Zylinder auf gegenüberliegenden Seiten der landwirtschaftlichen Sämaschine 1 auf, die jeweils mit einem Verbindungsabschnitt 15 (verdeckt in Fig. 2) am Hauptrahmen 2 sowie einem Verbindungsabschnitt 16 am Koppelrahmen 9 verbunden sind.

Der Heckrahmen 6 ist mit Hilfe des Betätigens der Einstelleinrichtung 10 um eine erste Drehachse 17 im Verbindungsabschnitt 13 und eine zweite Drehachse 18 an dem Koppelrahmen 9 schwenkbar. Hierdurch kann die Relativlage des Heckrahmens 6 in Bezug auf den Hauptrahmen 2 eingestellt werden.

Der Koppelrahmen 9 weist im gezeigten Ausführungsbeispiel mit Blick von der Seite eine Dreiecksform auf und ist in den Eckpunkten jeweils schwenk- oder drehbar gelagert. Ebenso sind die hydraulischen Zylinder der weiteren hydraulischen Einstelleinrichtung 12 auf gegenüberliegenden Seiten jeweils dreh- oder schwenkbar gelagert.

Mit Hilfe der hydraulischen Einstelleinrichtung 11 ist mittels Schwenken des Heckrahmens 6 um die Drehachse 18 ein Neigungswinkel für Rahmenbauteile des Heckrahmens 6 in Bezug auf den Boden E oder zur Horizontalen / Vertikalen einstellbar, beispielsweise ein horizontales Rahmenbauteil 6a sowie ein hierauf aufrechtstehendes vertikales Rahmenbauteil 6b. Wird zum Beispiel für das horizontale Rahmenbauteil 6a eine Neigungsstellung eingestellt, kann dies als Bezugsgröße für die Einstellung von Arbeitswerkzeugen 20 der Ausbringvorrichtungen 5 dienen.

Die Arbeitswerkzeuge 20 können ein oder mehrere Bodenbearbeitungswerkzeuge umfassen, zum Beispiel ein oder mehrere Furchenbildungseinrichtungen zum Herstellen einer Furche, in die dann Saatgut und / oder Düngermaterial mit Hilfe einer zugeordneten Ausbringeinrichtung der Ausbringvorrichtung 5 eingebracht werden. Die Anordnung von Arbeitswerkzeugen 20 kann weiterhin eine Tiefeneinstelleinrichtung mit einem oder mehreren Tiefeneinstellrädern aufweisen, für die die Relativlage in Bezug auf die Furchenbildungseinrichtung einstellbar ist, um so unterschiedliche Eindringtiefen für die Furchenbildungseinrichtung in dem Erdboden E beim Ausbringen des Saatguts einzustellen. Solche Anordnungen von Arbeitswerkzeugen 20 sind für Ausbringvorrichtungen von landwirtschaftlichen Sämaschinen in unterschiedlichen Ausführungsformen als solche bekannt.

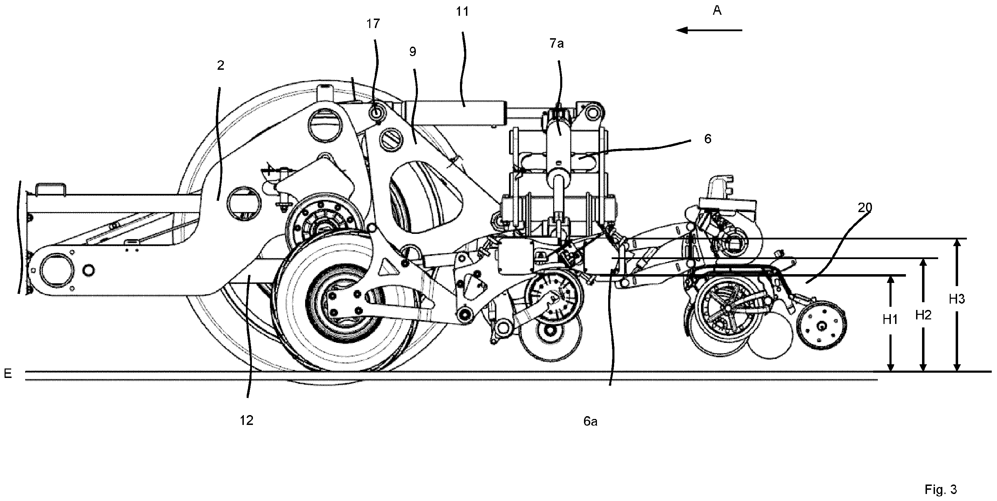

Insbesondere dann, wenn, wie im gezeigten Beispiel dargestellt, mehrere Arbeitswerkzeuge in der Anordnung von Arbeitswerkzeugen 20 in Fahrt- oder Arbeitsrichtung A hintereinanderliegend angeordnet sind, ist es von besonderer Bedeutung, die Relativlage der Anordnung von Arbeitswerkzeugen 20 in Bezug auf den Boden E im Betrieb korrekt einzustellen, was mit Hilfe der Einstelleinrichtung 10 effizient ermöglicht ist. Dies wird nachfolgend unter Bezugnahme auf die Fig. 3 bis 5 weiter erläutert.

Fig. 3 bis 5 zeigen den heckseitigen Teil der landwirtschaftlichen Sämaschine 1, wobei der Heckrahmen 6 und somit die Ausbringvorrichtungen 5 mit der jeweiligen Anordnung von Arbeitswerkzeugen 20 in verschiedenen Relativstellungen in Bezug auf den Hauptrahmen 2 verlagert ist, was sich durch unterschiedlichen Höhen H1, H2, H3 über dem Boden E ausdrückt.

Das horizontale Rahmenbauteil 6a dient in diesem Beispiel als Bezugsobjekt, wobei für das horizontale Rahmenbauteil 6a in allen drei unterschiedlichen Rahmenstellungen des Heckrahmens 6 in den Fig. 3 bis 5 jeweils eine im Wesentlichen parallele Lage oder Ausrichtung in Bezug auf den Erdboden E eingestellt ist, insbesondere eine horizontale Ausrichtung. Dieses bedeutet, dass auch für die Anordnung von Arbeitswerkzeugen 20 eine im Wesentlichen horizontale Ausrichtung der Anordnung eingestellt ist.

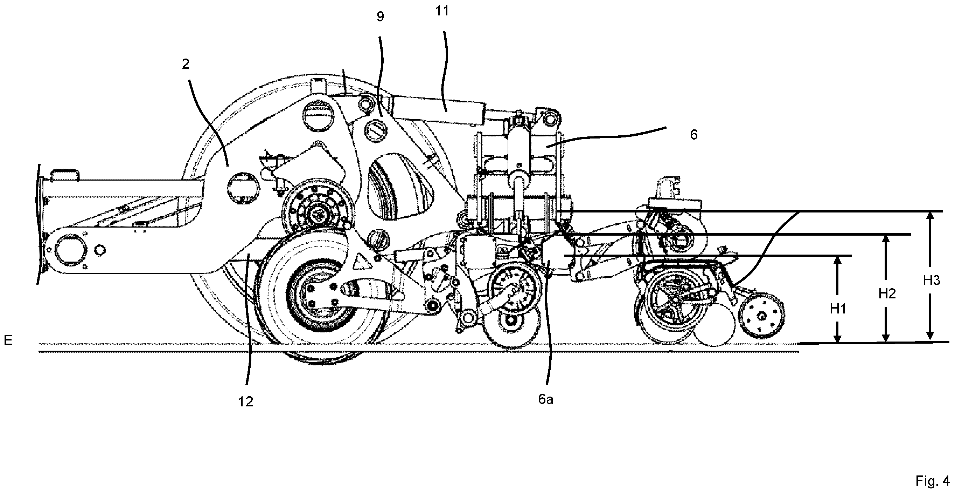

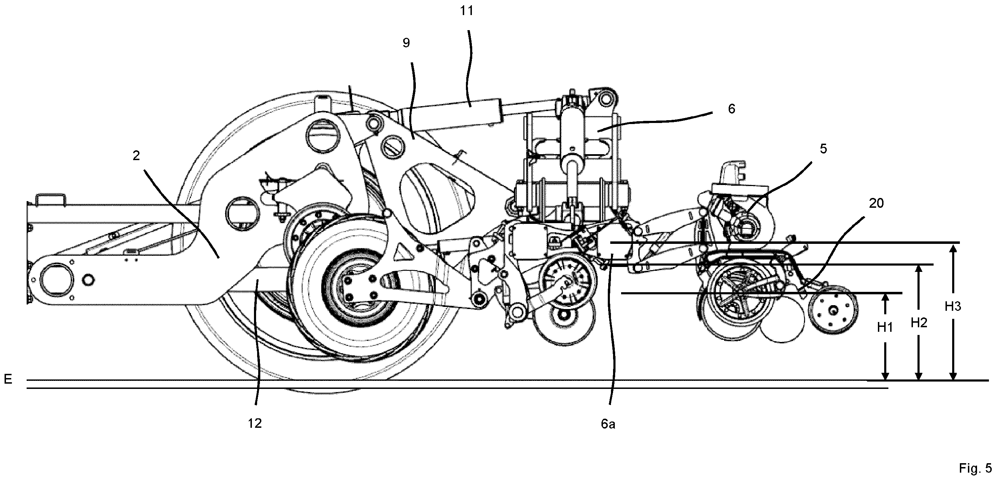

Fig. 3 zeigt den Heckrahmen 6, insbesondere das horizontale Rahmenbauteil 6a in einer zweiten Position mit der Höhe H2 über dem Boden E. Zum Verlagern des Heckrahmens 6 mit dem horizontalen Rahmenbauteil 6a in eine erste Position mit der Höhe H1 gemäß Fig. 4 werden die hydraulischen Zylinder der hydraulischen Einstelleinrichtung 11 und der weiteren hydraulischen Einstelleinrichtung 12 jeweils eingefahren, also die Zylinderlänge jeweils verkürzt. Zum Verlagern des Heckrahmens 6 mit dem horizontalen Rahmenbauteil 6a in eine dritte (erhöhte) Position mit der Höhe H3 gemäß Fig. 5 werden die hydraulischen Zylinder der hydraulischen Einstelleinrichtung 11 und der weiteren hydraulischen Einstelleinrichtung 12 jeweils ausgefahren, also die Zylinderlänge vergrößert.

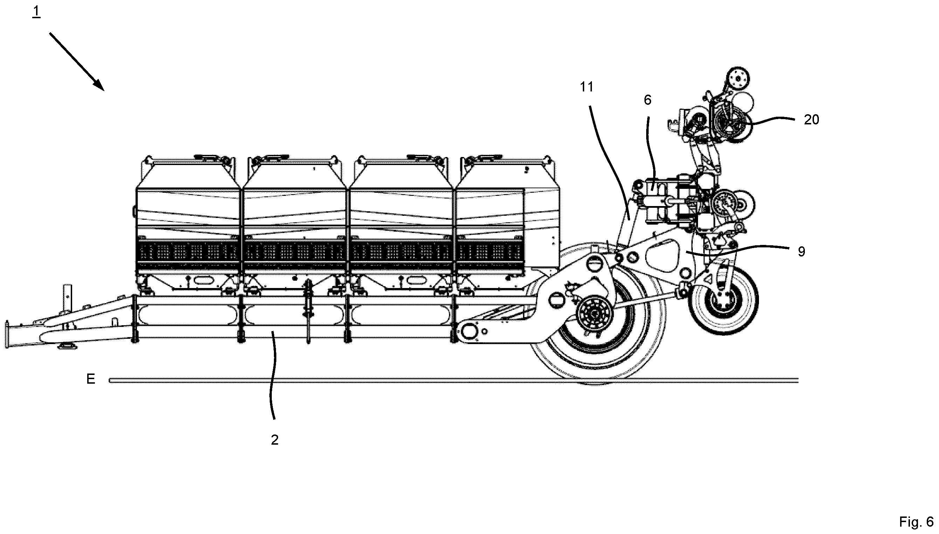

Die Einstelleinrichtung 10 mit der hydraulischen Einstelleinrichtung 11 und der weiteren hydraulischen Einstelleinrichtung 12 kann weiterhin dazu verwendet werden, die Reihenanordnung 4 mit den Ausbringvorrichtungen 5 in eine vollständig angehobene Stellung gemäß Fig. 6 zu verlagern, was dazu dient, die Reihenanordnung 4 mit den Ausbringvorrichtungen 5 für das Verbringen in eine Transportstellung vorzubereiten. Hierzu werden zunächst die hydraulischen Zylinder der weiteren hydraulischen Einstelleinrichtung 12 ausgefahren, also die Zylinderlänge vergrößert, um anschließend den hydraulischen Zylinder der hydraulischen Einstelleinrichtung 11 einzufahren, also die Zylinderlänge zu verkürzen.

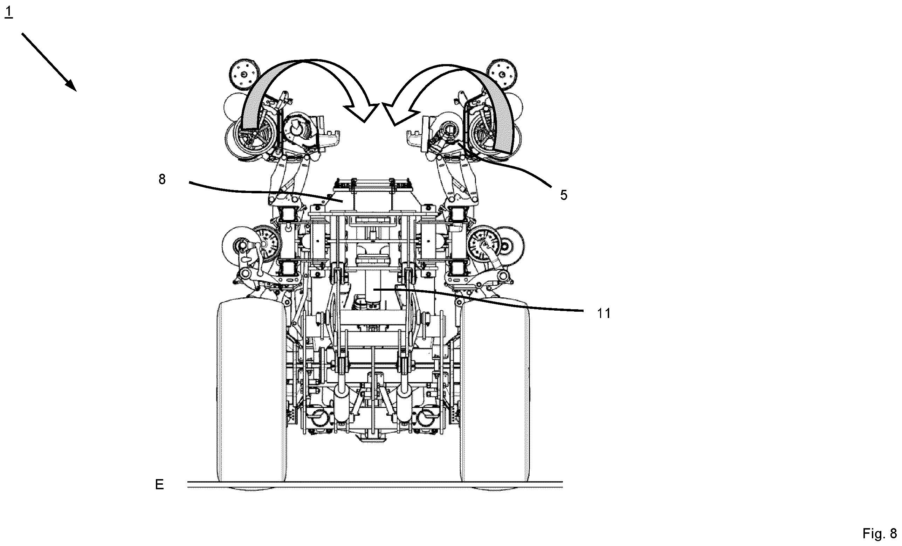

Sodann kann die Reihenanordnung 4 der Ausbringvorrichtungen 5, ausgehend von der Stellung in Fig. 6, gemäß den Fig. 7 und 8 in die Transportstellung (vgl. Fig. 8) verlagert werden, in dem zunächst die Seitenarme 6a, 6b mit Hilfe der hydraulischen Schwenkzylinder 7a, 7b in einen Bereich seitlich des Tanks 8 verlagert werden (vgl. Fig. 7), um schließlich gemäß Fig. 8 die Ausbringvorrichtungen 5 einzuschwenken, so dass für die landwirtschaftliche Sämaschine 1 eine erlaubte Transportbreite eingestellt ist, insbesondere für eine Straßenfahrt.

Zum Steuern und Regeln der Einstelleinrichtung 10 mit der hydraulischen Einstelleinrichtung 11 und der weiteren hydraulischen Einstelleinrichtung 12 zum Verlagern des Heckrahmens 6 kann gemäß Fig. 2 eine Steuereinrichtung 30 vorgesehen sein, die eingerichtet ist, entsprechende Steuersignale zu erzeugen und hiermit einen Zufluss / Abfluss eines Hydraulikfluids zu den hydraulischen Zylindern der hydraulischen Einstelleinrichtung 11 und der weiteren hydraulischen Einstelleinrichtung 12 zu öffnen und zu schließen. Die Steuereinrichtung 30 kann auf der landwirtschaftlichen Sämaschine 1 und / oder dem diese ziehenden Schlepper (nicht dargestellt) gebildet sein.

Beispielsweise ist die Steuereinrichtung 30 an einen Datenbus angeschlossen, mit dem bei der landwirtschaftlichen Sämaschine 1 und / oder dem Schlepper elektronische Datensignale ausgetauscht werden.

Um das Verlagern des Heckrahmens in die unterschiedlichen Rahmenstellungen zu überwachen und zu steuern, ist bei der gezeigten Ausführungsform gemäß Fig. 2 vorgesehen, dass den hydraulischen Zylindern der hydraulischen Einstelleinrichtung 11 und der weiteren hydraulischen Einstelleinrichtung 12 eine Sensoreinrichtung 31 zugeordnet ist, mit der Sensorsignale für die Stellung des jeweiligen hydraulischen Zylinders erfasst werden können, beispielsweise Längen- oder Wegsignale. Weiterhin kann vorgesehen sein, dass die Steuereinrichtung 30 von einer Betriebsparameter-Sensoreinrichtung 32 Betriebsparameter-Signale empfängt, die im Betrieb zum Ausbringen des Saatguts einen Betriebsparameter anzeigen. Hierbei kann es sich beispielsweise um eine Sensoreinrichtung zum Erfassen einer Bodenfestigkeit oder - feuchtigkeit oder eine Sensoreinrichtung zum Erfassen eines Neigungswinkels für den Schlepper und / oder die landwirtschaftliche Sämaschine 1 handeln. Als Reaktion auf den Empfang der Betriebsparameter-Signale kann die Steuereinrichtung 30 diese verarbeiten und die Einstelleinrichtung 10 entsprechend steuern, um den Heckrahmen 6 zu verlagern.

Alternativ oder ergänzend kann vorgesehen sein, ein oder mehrere Sensoren für das horizontale und / oder das vertikale Rahmenbauteil vorzusehen, um für die Rahmenbauteile Messsignale zu erfassen, die einen Neigungswinkel und / oder eine räumliche Lage anzeigen, um diese Messsignale an die Steuereinrichtung zu geben, so dass in Abhängigkeit hiervon die hydraulischen Einstelleinrichtung 11 und / oder der weiteren hydraulischen Einstelleinrichtung 12 gesteuert werden können, wenn die Rahmenstellung für den Heckrahmen 6 eingestellt oder verändert wird.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Landwirtschaftliche Sämaschine (1), mit:
- einem Hauptrahmen (2);
- einem Heckrahmen (6),
- der heckseitig des Hauptrahmens (2) angeordnet und sich quer zu einer Fahrt-oder Arbeitsrichtung erstreckt und
- an dem eine sich quer zur Fahrt- oder Arbeitsrichtung ausgebildete Anordnung (4) von Ausbringvorrichtungen (5) angeordnet ist, die jeweils eingerichtet sind, Saatgut auszubringen;
- einem Koppelrahmen (9), über den der Heckrahmen (6) mit dem Hauptrahmen (2) verbunden ist; und
- einer Einstelleinrichtung (10), die dem Heckrahmen (6) zugeordnet und eingerichtet ist, den Heckrahmen (6) in eine erste Rahmenstellung, in welcher der Heckrahmen (6) in einer ersten Relativstellung zum Hauptrahmen (2) angeordnet ist, und in eine zweite Rahmenstellung zu verlagern, in welcher der Heckrahmen (6) in einer zweiten Relativstellung zum Hauptrahmen (2) angeordnet ist, die von der ersten Relativstellung verschieden ist.

2. Landwirtschaftliche Sämaschine (1) nach Anspruch 1, **dadurch gekennzeichnet, dass** die Einstelleinrichtung (10) eingerichtet ist, die erste Rahmenstellung derart einzustellen, dass im Betrieb zum Ausbringen des Saatguts ein horizontales Rahmenbauteil (6a) des Heckrahmens (6) im Wesentlichen parallel zur Bodenoberfläche angeordnet ist.

3. Landwirtschaftliche Sämaschine (1) nach Anspruch 1 oder 2, dadurch **gekenn- zeichnet,** dass die Einstelleinrichtung (10) eingerichtet ist, die zweite Rahmenstellung derart einzustellen, dass im Betrieb zum Ausbringen des Saatguts das horizontale Rahmenbauteil des Heckrahmens (6) relativ zur Bodenoberfläche in einer geneigten Stellung angeordnet ist.

4. Landwirtschaftliche Sämaschine (1) nach mindestens einem der Ansprüche, **dadurch gekennzeichnet, dass**
- die Ausbringvorrichtungen (5) jeweils wenigstens zwei Arbeitswerkzeuge aufweisen, die in der Fahrt- oder Arbeitsrichtung hintereinanderliegend angeordnet sind; und
- die Einstelleinrichtung (10) eingerichtet ist, die erste Rahmenstellung derart einzustellen, dass im Betrieb zum Ausbringen des Saatguts eine durch die wenigstens zwei Bodenbearbeitungswerkzeuge in Fahrt- oder Arbeitsrichtung verlaufende Verbindungslinie im Wesentlichen parallel zur Bodenoberfläche angeordnet ist.

5. Landwirtschaftliche Sämaschine (1) nach Anspruch 4, **dadurch gekennzeichnet, dass** die Einstelleinrichtung (10) eingerichtet ist, die zweite Rahmenstellung derart einzustellen, dass im Betrieb zum Ausbringen des Saatguts die Verbindungslinie relativ zur Bodenoberfläche geneigt ist.

6. Landwirtschaftliche Sämaschine (1) nach mindestens einem der Ansprüche, **dadurch gekennzeichnet, dass** die Einstelleinrichtung (10) mit einer hydraulischen Einstelleinrichtung (11) gebildet ist, die mit dem Heckrahmen (6) verbunden ist.

7. Landwirtschaftliche Sämaschine (1) nach mindestens einem der Ansprüche, **dadurch gekennzeichnet, dass** die Ausbringvorrichtungen (5) über eine jeweilige Parallelogramm-Verbindung mit dem Heckrahmen (6) verbunden sind, derart, dass im Betrieb zum Ausbringen des Saatguts die Ausbringvorrichtungen (5) relativ zum Heckrahmen (6) um eine Mittellage auf und ab schwenkbar sind.

8. Landwirtschaftliche Sämaschine (1) nach Anspruch 7, **dadurch gekennzeichnet, dass** die Einstelleinrichtung (10) eingerichtet ist, mit der ersten Rahmenstellung eine erste Mittellage für die Parallelogramm-Verbindung und mit der zweiten Rahmenstellung eine zweite Mittellage für die Parallelogramm-Verbindung einzustellen, die von der ersten Mittellage verschieden ist.

9. Landwirtschaftliche Sämaschine (1) nach mindestens einem der Ansprüche, **dadurch gekennzeichnet, dass** der Heckrahmen (6) um eine Schwenkachse schwenkbar und die Einstelleinrichtung (10) eingerichtet ist, den Heckrahmen (6) zum Verlagern zwischen der ersten und der zweiten Rahmenstellung um die Schwenkachse zu schwenken.

10. Landwirtschaftliche Sämaschine (1) nach mindestens einem der Ansprüche, **dadurch gekennzeichnet, dass** die Einstelleinrichtung (10) eine weitere hydraulische Einstelleinrichtung (12) aufweist, die dem Koppelrahmen (9) zugeordnet und eingerichtet ist, den Koppelrahmen (9) in eine erste Koppelrahmenstellung, in welcher der Koppelrahmen (9) in einer ersten Relativstellung zum Hauptrahmen (2) angeordnet ist, und in eine zweite Koppelrahmenstellung zu verlagern, in welcher der Koppelrahmen (9) in einer zweiten Relativstellung zum Hauptrahmen (2) angeordnet ist, die von der ersten Relativstellung verschieden ist.

11. Landwirtschaftliche Sämaschine (1) nach Anspruch 10, **dadurch gekennzeichnet, dass** die weitere hydraulische Einstelleinrichtung (12) mit wenigstens zwei hydraulischen Zylindern gebildet ist, der mit dem Koppelrahmen (9) verbunden und zum Einstellen der ersten und der zweiten Koppelrahmenstellung jeweils zwischen einer ersten und einer zweiten Zylinderstellung verlagerbar sind.

12. Landwirtschaftliche Sämaschine (1) nach mindestens einem der Ansprüche, **gekenn**- **zeichnet** durch eine Steuereinrichtung (30), die mit der Einstelleinrichtung (10) funktional verbunden und eingerichtet ist, Steuersignale zum Verlagern des Heckrahmens (6) in die erste und die zweite Rahmenstellung mittels der Einstelleinrichtung (10) bereitzustellen.

13. Landwirtschaftliche Sämaschine (1) nach Anspruch 12, **dadurch gekennzeichnet, dass** die Einstelleinrichtung (10) eine Sensoreinrichtung (31) aufweist, die mit der Steuereinrichtung (30) funktional verbunden und eingerichtet ist, Sensorsignale bereitzustellen, welche eine momentane Einstellung der Einstelleinrichtung (10) anzeigen.

14. Landwirtschaftliche Sämaschine (1) nach Anspruch 12 oder 13, dadurch **gekenn**- **zeichnet**, dass die Steuereinrichtung
- mit einer Betriebsparameter-Sensoreinrichtung (32) funktional verbunden ist, die eingerichtet ist, im Betrieb zum Ausbringen des Saatguts einen Betriebsparameter zu erfassen und Betriebsparameter-Signale, die den erfassten Betriebsparameter anzeigen, an die Steuereinrichtung (30) zu übermitteln, und
- eingerichtet ist, die Betriebsparameter-Signale auszuwerten und die Einstelleinrichtung (10) in Abhängigkeit hiervon zu steuern.

15. Landwirtschaftliche Sämaschine (1) nach mindestens einem der Ansprüche 12 bis 14 sowie Anspruch 11, **dadurch gekennzeichnet, dass** die Steuereinrichtung (30) mit einer Messeinrichtung funktional verbunden ist, die eingerichtet ist, Messsignale zu erfassen und an die Steuereinrichtung zu übermitteln, die eine über die Einstelleinrichtung (10) auf den Koppelrahmen (9) und / oder den Heckrahmen (6) eingeleitete Zugkraft anzeigen.
